# EUROPÄISCHE PATENTSCHRIFT

(11) **EP 0 356 620 B1**
(45) Veröffentlichungstag und Bekanntmachung des Hinweises auf die Patenterteilung: **29.12.1993**
(21) Anmeldenummer: 89109199.3
(22) Anmeldetag: 22.05.1989
(51) Int. Cl.: H04N 5/232, B25J 9/18

(54) **Automatische Steuerung der Fokussierung einer Video-Kamera für industrielle/militärische Zwecke**
Automatic focusing adjustment of a video camera for industrial or military purposes
Réglage automatique de la focalisation d'une caméra vidéo pour les applications industrielles ou militaires

(30) Priorität: 28.07.1988 CH 2859/88
(43) Veröffentlichungstag der Anmeldung: 07.03.1990
(73) Patentinhaber: Oerlikon-Contraves AG, 8052 Zürich (CH)
(72) Erfinder: Vuichard, Albin, CH-8753 Mollis (CH); Buehler, Bruno, CH-8174 Stadel (CH); Cavin, Tell, CH-8610 Uster (CH)

(56) Entgegenhaltungen:
- EP-A- 0 263 510
- US-A- 4 660 092
- ROBOTICS, Band 3, Nr. 2, Juni 1987, Seiten 157-165, Elsevier SciencePublishers, B.V., Amsterdam, NL; I. PLANDER: "Trends in the development of sensor systems and their use in some technological areas"
- RESEARCH DISCLOSURE, Nr. 228, April 1988, Seiten 215-217, Zusammenfassung Nr.28842, New York, US; "Brightness-dependent focusing aid for a manually focused video camera"

## Beschreibung

Die Erfindung liegt auf den Gebieten der Optik, der Elektronik und der Bildverarbeitungstechnik. Sie betrifft ein Verfahren gemäss Oberbegriff des Patentanspruchs 1 und eine Vorrichtung zur Ausführung des Verfahrens. Insbesondere wird die Video-Kamera zur Versorgung eines Industrie-Roboters verwendet, oder es dient das Bild einer FLIR-Kamera zur Versorgung der Bild-Steuereinheit (sog. Video-Tracker) einer automatischen Zielverfolgungsvorrichtung. Als FLIR-Kamera (FLIR = forward looking infrared) wird eine auf Wärmestrahlung empfindliche Infrarot-Kamera bezeichnet.

Automatische Vorrichtungen zur Scharfeinstellung (Fokussierung) des Bildes bei Kameras sind wohlbekannt.

Es wird auf die EP-A-0 263 510 als nächstliegender Stand der Technik verwiesen, welche eine motorische Fokussteuerung aufgrund einer Bildauswertung eines zu berücksichtigenden Bildausschnittes und der Veränderung bzw. dem Nachstellen des Bildausschnittes zeigt, wobei zur Bildauswertung die steilste Flanke eines Videosignals im Bild detektiert wird und die Nachsteuerung so erfolgt, dass die Flanke maximal steil wird.

Es ist zu unterscheiden zwischen aktiven und passiven Fokussiermethoden. Bei einer ersten Methode wird von der Kamera ein Signal, beispielsweise ein Ultraschall- oder Infrarotstrahlenbündel, ausgesandt und das vom Objekt reflektierte Signal empfangen. Bei der Ultraschall-Anwendung lässt sich aus der Zeitdifferenz zwischen dem emittierten Signal und dem Echo der Abstand des Objektes von der Kamera (Objektweite) ermitteln. Bei der Infrarot-Messung wird das reflektierte Signal von einer seitlich des Senders an der Kamera angeordneten Photodiode empfangen und aus dem Parallelwinkel die Objektweite bestimmt. Die Fokuseinstellung wird schliesslich anhand des funktionellen Zusammenhanges zwischen Objektweite und Bildweite vorgenommen. Dieses Verfahren der aktiven Distanzmessung ist für den nicht-professionellen Bereich gut geeignet und lässt sich mit beschränktem apparativen Aufwand realisieren. Bei industriellen Anwendungen durfte die Störbarkeit des Reflexes durch andere interferierende Quellen Probleme schaffen. Im militärischen Bereich ist jegliche aktive Zielvermessung aus tarntechnischen Gründen zum vorneherein abzulehnen.

Bei einer zweiten Methode wird die Information über den Fokussierung-Zustand direkt dem empfangenen Bild aufgrund eines festgelegten Kriteriums entnommen. Die Objektiv-Einstellung wird bis zur Erreichung eines, dem Fokussier-Kriterium entsprechenden, Optimums korrigiert.

Vom Standpunkt der optischen Abbildungstheorie wäre es naheliegend, das Fokussier-Kriterium auf eine sog. Raumfrequenz-Analyse abzustützen. Letztere beruht auf der Eigenschaft von Sammellinsen, ein mit monochromatischer, paralleler (zeitlich und räumlich kohärent) Strahlung beleuchtetes Bild in die Fourier-Transformierte überzuführen. Diese Fourier-Transformierte, das sog. Raumfrequenz-Bild, ist in der Fokalebene der Abbildungslinse positioniert und entspricht einer Analyse der beleuchteten Bildstruktur. Grobe Strukturen des Originals bedeuten niedrige und Feinstrukturen hohe Raumfrequenzen. Letztere sind nur bei guter Fokussierung vorhanden, da Feinstrukturen nur bei scharfer Abbildung wiedergegeben werden. Das Auftreten hoher Raumfrequenzen ist somit ein brauchbares Kriterium für eine optimale Fokus-Einstellung des Objektivs. In der Praxis stösst man allerdings bei der Anwendung eines solchen Verfahrens auf Schwierigkeiten, da einerseits das Objekt fast durchwegs mit weissem - also nicht-monochromatischem - Licht bestrahlt wird und demzufolge eine Durchmischung höherer Raumfrequenzen stattfindet, andererseits die Ausmessung der Lichtintensitätsverteilung in der Fokalebene mit sehr hoher Präzision durchgeführt werden müsste.

Die Fokussierung bei Photokameras wird daher oft nach anderen Kriterien vorgenommen. Beispielsweise wird der scharf einzustellende Bildausschnitt durch zwei Linsen auf eine CCD-Bildsensor-Kette abgebildet. Aus dem Abstand der den beiden Linsen entsprechenden Bildstrukturen wird auf die Lage des Fokus bezüglich der Bildebene geschlossen. Detaillierte Informationen können den Datenblättern von einschlägigen Photokameras entnommen werden.

Bei Kameras mit elektronischer Bildaufzeichnung, beispielsweise Video-Kameras, kommen sehr oft CCD-Bildanalyse-Verfahren, wie das bereits erwähnte, zum Einsatz, da den aktiven Methoden (Ultraschall- und Infrarot-Verfahren) zu wenig Zuverlässigkeit beigemessen wird. Insbesondere ist die Störbarkeit der Infrarot-Reflexion durch Glasscheiben und schräge Objekt-Flächen zu erwähnen.

Automatische Fokussier-Vorrichtungen von Kameras für nicht-industrielle Anwendungen sind vornehmlich im Sinne der Hebung des Anwender-Komfortes als Handhabungs-Erleichterungen anzusehen, im übrigen kann ihnen aber kaum eine zwingende Bedeutung beigemessen werden. Anders ist die Situation bei Kameras, die im industriellen Bereich, beispielsweise in der Robotik oder für militärische Zwecke, eingesetzt sind. In jenen Fällen können dem Operateur oft Aufwendungen für die Fokussierung schlechthin nicht zugemutet werden - einerseits weil andere Aufgaben Priorität haben, andererseits weil ihm im Falle von rasch beweglichen Objekten keine Zeit zur Nachführung der Fokussierung zur Verfügung steht. Anstrengungen zur Automatisierung des Fokussier-Vorganges sind daher mehr als angebracht. Trotzdem waren bisher keine Vorrichtungen und Verfahren zur voll befriedigenden Lösung dieses Problems bekannt.

Eine wichtige Voraussetzung jedes Fokussier-Verfahrens ist die Erkennung des scharf einzustellenden Objektes vor dem als unscharf eingestellt hingenommenen Hintergrund. Dieses Problem ist bei nicht-industriellen oder nicht-militärischen Anwendungen bedeutungslos, da dort der zu fokussierende Bildbereich mittels einer Suchvorrichtung vom Operateur bestimmt wird.

Es ist durchaus denkbar, dass im Video-Kamera-Bild eines Industrie-Roboters das bewegliche Objekt, beispielsweise ein Werkstück oder ein Werkzeug, gegenüber dem Hintergrund zeitweise kaum oder überhaupt nicht erkannt werden kann. Dieses Problem stellt sich insbesondere bei militärischen Zielen, die sich vor einem sich stets ändernden Hintergrund bewegen. In jenen Fällen muss der Objekt-Erkennung grosse Bedeutung beigemessen werden. Darauf soll aber hier nicht im Detail eingegangen werden, da die Helligkeits- und Kontrast-Optimierung des Video-Bildes in der Patentanmeldung EP-A- 0353 409 beschrieben ist.

Es ist Aufgabe der Erfindung, ein Verfahren und eine entsprechende Vorrichtung zu schaffen, welche bei einer Video-Kamera, beispielsweise im Zusammenhang mit der Steuerung eines industrie-Roboters, oder der Verfolgung eines Zieles mittels einer Zielverfolgungs-Plattform, ein stets optimal scharfes Bild des Objektes schafft. Die Aufgabe wird durch die Erfindung gemäss den Patentansprüchen 1 und 2 gelöst. Es ist dies ein Vorgehen, das eine automatische, auf einer Echtzeit-Bildauswertung beruhende, passive Fokussierung benützt, die darauf beruht, dass in einem beschränkten, vorgegebenen Bildfeld der Mittelwert der Lichtintensität gemessen und das Intensitäts-Extremum in Funktion der Fokus-Einstellung gesucht wird.

Der Aufbau der Vorrichtung wird anhand der folgenden Abbildungen beschrieben:
- Fig. 1: zeigt das Blockschema einer das erfinderische Verfahren ausführende Vorrichtung am Beispiel eines Industrie-Roboters, bestehend aus einer Video-Kamera, einer Bild Steuereinheit und einer Fokus-Steuereinheit,
- Fig. 2: stellt ein Blockschema der automatischen Bild-Steuereinheit dar,
- Fig. 3: veranschaulicht die Helligkeitsverteilung längs einer Koordinate auf der Bildflache vor (Fig. 3a) und nach (Fig. 3b) der Fokussierung auf ein Objekt,
- Fig. 4: zeigt ein Blockdiagramm des Informationsflusses der automatischen Fokus-Steuervorrichtung der Video-Kamera.
- Fig. 5: zeigt das Blockschema einer Vorrichtung zur Anwendung des erfinderischen Verfahrens zur Verfolgung eines militärischen Zieles.

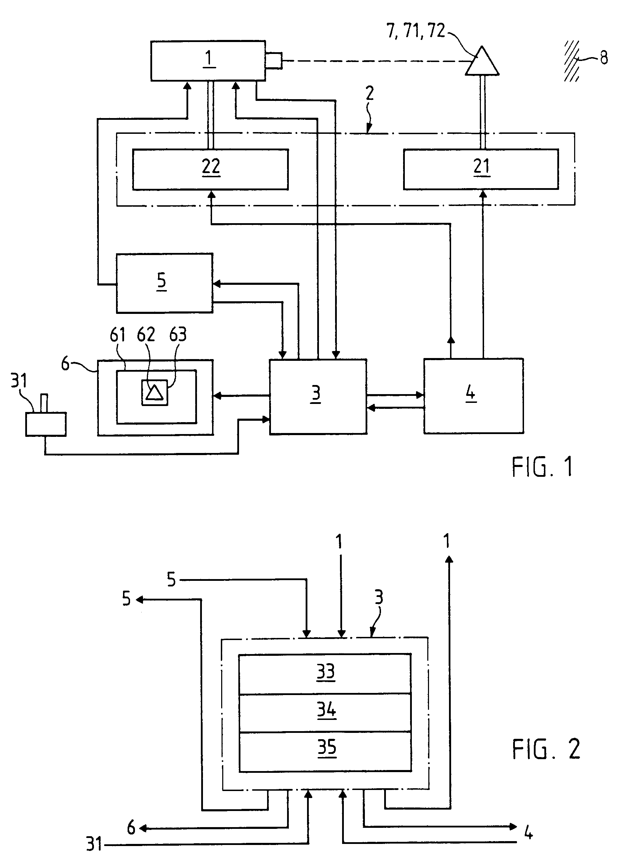

Fig. 1 zeigt den prinzipiellen Aufbau einer Vorrichtung zur Ausführung des erfinderischen Verfahrens anhand eines Blockschemas. Es handelt sich um ein Gerät zur optischen Ueberwachung einer automatisch steuerbaren Manipulier-Vorrichtung 2, beispielsweise eines Industrie-Roboters 21 oder einer vollautomatisch steuerbaren Werkzeugmaschine. Ueberwacht wird das Ergreifen und die Handhabung eines Objektes 7, beispielsweise eines Werkstückes 71 oder eines Werkzeuges 72, mittels einer Video-Kamera 1.

Die Vorrichtung besteht im wesentlichen aus der Video-Kamera 1, welche das Bild des Objektes 7 empfängt und einer Bild-Steuereinheit 3, die der Bildinformation entsprechende, elektrische Analogsignale überträgt. In dieser Bild-Steuereinheit 3 wird die Bildinformation ausgewertet, wobei Signale zum optimalen Betrieb der Video-Kamera 1 an letztere direkte oder indirekt über eine Fokus-Steuereinheit 5, zurückgeführt werden. Die aufbereitete Bildinformation der Bild-Steuereinheit 3 wird von einem Hauptrechner 4 empfangen und dort in Steuersignale transformiert. Diese werden beispielsweise über ein Servo-System in eine Bewegungsfolge der steuerbaren Manipulier-Vorrichtung 2 umgesetzt. Der Hauptrechner 4 steuert zusätzlich den gesamten Bewegungslauf der Vorrichtung, beispielsweise auch eine Plattform 22, die mit der Video-Kamera 1 in mechanisch starrer Verbindung steht und es damit erlaubt, die Video-Kamera 1 dem Objekt 7 nachzuführen.

Ein Monitor 6, der mit der Bild-Steuereinheit 3 in Verbindung steht, gestattet eine visuelle Ueberwachung des Objektes 7. Zusätzlich erlaubt ein Manipulator 31, der ebenfalls mit der Bild-Steuereinheit 3 verbunden ist, eine manuelle Zuweisung des Objektes 7.

Die Bild-Steuereinheit 3, die Fokus-Steuereinheit 5 und der Hauptrechner 4 können beispielsweise zu einer Einheit zusammengefügt sein.

Der prinzipielle Aufbau der Bild-Steuereinheit 3 ist in Fig. 2 dargestellt. Dieselbe besteht aus einer Bildauswerte-Einheit 33, einer Objekthelligkeits-Steuereinheit 34 und einem I/O-Prozessor 35.

Das analoge Video-Signal der Video-Kamera 1 wird zunächst von einem A/D-Wandler digitalisiert, d.h. in Zahlensequenzen verwandelt, welche über die Intensität der einzelnen Bildpunkte Auskunft geben. Diese digitale Bildinformation wird anschliessend der Bildauswerte-Einheit 33 zugeführt. Dort wird die Interpretation des digitalisierten Video-Signales vorgenommen. Allenfalls aufgrund einer sog. Grauwert-Histogramm-Analyse werden Objekt 7 und Hintergrund 8 unterschieden und Signale über deren Helligkeit der Objekthelligkeits-Steuereinheit 34 zugeführt. Diese erzeugt daraus, wie in der vorgängig aufgeführten Patentanmeldung EP-A-0353 409 im Detail beschrieben ist, Steuersignale, welche über den I/O-Prozessor 35 die Video-Kamera 1, derart ansteuern, dass in der Abbildung das Objekt 7 vom Hintergrund 8 bezüglich seiner Helligkeit möglichst gut abgehoben ist.

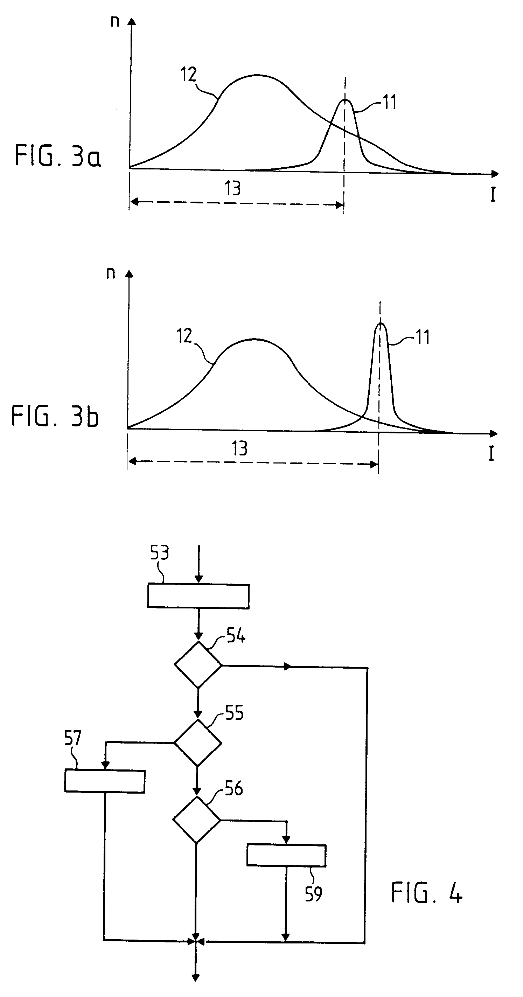

Die Scharfeinstellung der Video-Kamera 1, die Gegenstand der vorliegenden Erfindung ist, wird in der Fokus-Steuereinheit 5 vorgenommen. Es soll darauf anhand der Uebersichts-Darstellung von Fig. 1 und der örtlichen Bild-Helligkeitsverteilung von Fig. 3 eingegangen werden.

Wie bereits erwähnt, kommt bei der vorgesehene Anwendung für die Scharfeinstellung der Video-Kamera 1 nur ein passives Fokussierverfahren in Frage.

Die vorliegende erfinderische Idee beruht auf der Verwendung der mittleren Helligkeit 13 eines Teilbereiches des Videobildes 61 als Mass für den Zustand der Fokussierung der Video-Kamera 1 auf das Objekt 7. Dieser Teilbereich ist durch einen, ein BiId 62 des Objektes 7 einschliessenden, Rahmen 63 definiert.

Der Rahmen 63 wird beispielsweise vom Operateur mittels des Manipulators 31 in Form eines Steuerknüppels festgelegt, wobei der Operateur sowohl die Position dieses Rahmens 63, als auch dessen Grösse bestimmen kann. Die Aufgabe des Operateurs besteht darin, den Rahmen 63 möglichst klein, aber das ganze Objektbild 62 umschliessend, festzulegen. Nebst der manuellen Bestimmung des Rahmens 63 besteht auch die Möglichkeit, dass derselbe durch die Bild-Steuereinheit 3, dessen Aufgabe ohnehin in der Erkennung und optimalen Darstellung des Objektes 7 besteht, automatisch ermittelt wird.

Die mittlere Helligkeit 13 resultiert aus der Ausmittelung der Helligkeit der Objekt-Bildpunkte, die innerhalb des Rahmens 63 liegen. Die Bestimmung der mittleren Helligkeit kann durch die vorgängig erwähnte grauwert-Histogramm-Analyse erfolgen, wobei die Mittel zum Erstellen und Auswerten eines solchen Histogrammes beispielsweise aus der US-A- 4 613 269 bekannt sind.

Das Fokussier-Prinzip, das auf einer Extremwertbildung der mittleren Helligkeit 13 der Objekt-Bildpunkte innerhalb des Rahmens 63 beruht, ist anhand von Fig. 3 ersichtlich. Bei schlechter Fokussierung hebt sich, wie aus Fig. 3a hervorgeht, die Helligkeitsverteilung 11 des Objektes 7 von der Helligkeitsverteilung 12 des Hintergrundes 8 wenig ab, da das Bild 62 des Objektes 7 wegen der Abbildungsunschärfe nicht genau begrenzt ist und damit Lichtintensität der Objekt-Bildpunkte auf die Umgebung des Objektbildes 62 übertragen wird. Bei guter Fokussierung ist hingegen, wie Fig.3b zeigt, die Lichtintensität des Objektes 7 auf die Bildpunkte innerhalb der scharf begrenzten Objektkontur konzentriert. Die mittlere Helligkeit 13, welche diesen Punkten des Objektbildes 62 zugeschrieben werden kann, nimmt bei der Fokussierung ein Extremum an ein Maximum oder Minimum, je nachdem, ob die Helligkeit des Objektbildes 62 grösser ist als diejenige des Hintergrundes 8 oder umgekehrt. Damit nimmt aber auch die mittlere Helligkeit 13 innerhalb des das Objektbild 62 umschliessenden Rahmens 63 ein Extremum an. Bei Veränderung der Fokussierung ändert sich auch die Helligkeitsverteilung 12 des Hintergrundes. Da aber nicht auf den Hintergrund fokussiert wird, ist der Einfluss der entsprechenden Helligkeitsveränderung vernachlässigbar klein.

Der beschriebene Fokussier-Vorgang wird mittels eines digitalen Verfahrens realisiert. Prinzipiell ist es aber auch denkbar, dass dieses Problem, und gegebenenfalls auch die Bildhelligkeits-Steuerung, nicht digital vorgenommen wird, sondern direkt durch Verarbeitung der Analogsignale der Video-Kamera 1 erfolgt. Diese Möglichkeit könnte dann von Vorteil sein, wenn die automatische Fokussierung in die Video-Kamera integriert ist.

Es muss vorausgesetzt werden, dass sich bereits vor Beginn des Fokussier-Vorganges das Objekt 7 vom Hintergrund 8 durch Wahl der Helligkeit und des Bild-Kontrastes (Gain/Offset-Steuerung der Video-Kamera 1) möglichst gut abhebt. Dabei wird die Abbildung von Objekt 7 und Hintergrund 8 nicht dem Auge des den Bildschirm des Monitors 6 betrachtenden Operateurs optimal angepasst, sondern vielmehr für die automatische Erkennbarkeit des Objektes 7 optimiert. Während des Fokussier-Vorganges selbst sollten an der Gain/Offset-Steuerung der Kamera keine Manipulation vorgenommen werden, da sonst zwischen den beiden Regelsystemen, nämlich der Fokussier- und der Gain/Offset-Steuerung, Interferenzen auftreten können.

Der chronologische Ablauf der Fokussierung wird anhand von Fig. 4 beschrieben. Während der Fokussierphase werden vom Befehlsgenerator 53 in periodischer Folge variierende und der Bewegung des Zieles Rechnung tragende Eingabedaten produziert. Das Vorhandensein dieser Daten wird im Testpunkt 54 kontrolliert. Im negativen Fall wird der Fokussier-Zyklus wieder verlassen. Andernfalls wird im Testpunkt 55 geprüft, ob bereits die zur besseren Fokussierung führende Richtung der Fokus-Verstellung festgelegt worden ist. Trifft das noch nicht zu, so wird durch den Richtungs-Bestimmer 57 anhand einer kleinen Aenderung der Fokussier-Daten untersucht, ob die vom Befehisgenerator 53 gelieferten Daten im Sinne des besprochenen Fokussier-Kriteriums zu einer Verbesserung der Scharfeinstellung führen. Ist das tatsächlich der Fall, so wird der Fokussier-Zyklus direkt verlassen, während andernfalls die Befehls-Generatordaten entsprechend abgeändert werden. Da nun die zur Verbesserung der Fokussierung führenden Daten festgelegt sind, kann im nächsten Durchgang der Testpunkt 55 direkt passiert werden. Im Testpunkt 56 wird schliesslich überprüft, ob sich die Fokussierung gegenüber derjenigen des vorgängigen Zyklus wesentlich, also um einen Wert, der einen vorgegebenen Grenzwert überschreitet, geändert hat. Falls das nicht zutrifft, so wird der Fokussier-Vorgang durch eine entsprechende Meldung des Fokus-Stoppers 59 "Objekt ist fokussiert" abgebrochen. Andernfalls wird der Fokussier-Zyklus wiederholt.

Die Bildauswerte-Einheit 33 vermittelt nebst der mittleren Helligkeit 13 dem I/O-Prozessor 35 Angaben über die Position des Objektes innerhalb des Bildbereiches der Video-Kamera 1. Diese Information wird dem Hauptrechner 4 zugeführt, welcher anhand dieser Positionsangaben die Bewegungen des IndustrieRoboters 21 kontrolliert. Daneben kann es sich als notwendig erweisen, die Video-Kamera 1 dem Objekt 7 nachzuführen. Zu diesem Zweck wird die Plattform 22, auf der die Video-Kamera 1 befestigt ist, durch Steuersignale des Hauptrechners 4 kontrolliert.

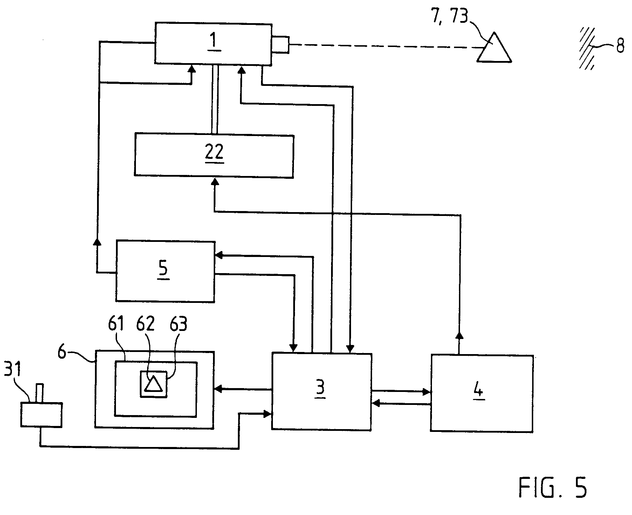

Die Abbildung von Fig. 5 zeigt die Anwendung des Verfahrens auf eine Zielverfolgungsvorrichtung. Dieselbe besteht aus einer azimutal und in der Neigung beweglichen Plattform 22, welche mit der Video-Kamera 1, beispielsweise einer FLIR-Kamera, in mechanisch starrer Verbindung steht und der besprochenen Bild-Steuereinheit 3. Letztere überwacht sowohl die Kamera 1 als auch unter Beizug des Hauptrechners 4 die Position der Plattform 22 aufgrund des Video-Signales, das in der Zielverfolgungskamera 1 erzeugt wird. Der Monitor 6, der mit der Bild-Steuereinheit 3 in Verbindung steht, erlaubt dem Operator eine visuelle Verfolgung des Zieles.

## Patentansprüche

1. Verfahren zur automatischen Steuerung der Fokussierung in einer Video-Kamera (1) mit einer passiven Fokussiereinrichtung, wobei in das Videobild (61) der Video-Kamera (1) ein Rahmen (63) zum Einfangen eines Objektbildes (62) eingeblendet wird, dadurch gekennzeichnet, dass die mittlere Helligkeit (13) der Bildpunkte des Objektbildes (62) derart als Kriterium zur Steuerung der Fokussiereinrichtung verwendet wird, dass die mittlere Helligkeit (13) einen Extremwert annimmt.

2. Vorrichtung zur Ausführung des Verfahrens nach Anspruch 1, mit einer automatischen Steuerung der Fokussierung in einer Video-Kamera (1) mitpassiver Fokussiereinrichtung und mit einem in das Videobild (61) der Video-Kamera (1) zum Einfangen eines Objektbildes (62) eingeblendeten Rahmen (63), gekennzeichnet durch eine Bild-Steuereinheit (3), welche mit einem Rechner (4), der Video-Kamera (1) undeiner Fokus-Steuereinheit (5) und diese ihrerseits mit der Video-Kamera (1) verbunden sind, wobei die Bild-Steuereinheit (3) die Ermittlung der mittleren Helligkeit (13) der Bildpunkte des Objektbildes (62) innerhalb des Rahmens (63) durchführt und der mittleren Helligkeit (13) entsprechende Steuersignale an die Fokus-Steuereinheit (5) abgibt.

3. Vorrichtung nach Anspruch 2, dadurch gekennzeichnet, dass die Fokus-Steuereinheit (5) Steuersignale an die Fokussiereinrichtung der Video-Kamera (1) abgibt und diese solange antreibt, bis die Änderung der mittleren Helligkeit (13) der Bildpunkte des Objektbildes (62) in Abhängigkeit von der Fokuseinstellung einen festgelegten Grenzwert nicht mehr überschreitet.

4. Vorrichtung nach Anspruch 2 oder 3, dadurch gekennzeichnet, dass die Video-Kamera (1) eine FLIR-Kamera (forward looking infrared camera) ist.

5. Anwendung des Verfahrens nach Anspruch 1, wobei die Video-Kamera (1) mit einem Industrie-Roboter (21) in Verbindung steht und ein Werkstück (71) oder Werkzeug (72) optisch aufnimmt.

6. Anwendung des Verfahrens nach Anspruch 1, wobei eine FLIR-Kamera mit einer beweglichen Plattform (22) in Verbindung steht und ein Ziel (73) optisch aufnimmt.

## Claims

1. Process for automatic focusing control in a video camera (1) with a passive focusing device, in which respect a frame (63) for inclusion of an object image (62) is superimposed on the video image (61) of the video camera (1), **characterised in that** the mean brightness (13) of the image points of the object image (62) are used as a criterion for controlling the focusing device in such a manner that the mean brightness (13) takes up an extreme value.

2. Device for carrying out the process according to claim 1, comprising an automatic focusing control in a video camera (1) with passive focusing device and a frame (63) which is superimposed on the video image (61) of the video camera (1) for inclusion of an object image (62), **characterised by** an image-control unit (3), which is connected to a computer (4), the video camera (1) and a focus-control unit (5) which is itself connected to the video camera (1), in which respect the image-control unit (3) determines the mean brightness (13) of the image points of the object image (62) within the frame (63) and feeds control signals which correspond with the mean brightness (13) to the focus-control unit (5).

3. Device according to claim 2, **characterised in that** the focus-control unit (5) feeds control signals to the focusing device of the video camera (1) and drives it until the changing of the mean brightness (13) of the image point of the object image (62) no longer exceeds a specified threshold value in dependence on the focal setting.

4. Device according to claim 2 or 3, **characterised in that** the video camera (1) is a FLIR camera (forward-looking infrared camera).

5. Use of the process according to claim 1, in which respect the video camera (1) is connected to an industrial robot (21) and optically receives a workpiece (71) or a tool (72).

6. Use of the process according to claim 1, in which respect a FLIR camera is connected to a movable platform (22) and optically picks up a target (73).

## Revendications

1. Procédé de réglage automatique de la focalisation dans une caméra vidéo (1) munie d'un dispositif passif de focalisation, en formant dans l'image vidéo (61) de la caméra vidéo (1) un cadre (63) pour saisir une image d'objet (62), caractérisé en ce que la clarté moyenne (13) des points d'image de l'image de l'objet (62) est utilisée comme unité de réglage du dispositif de focalisation, de sorte que la clarté moyenne (13) passe par un extremum.

2. Dispositif pour réaliser le procédé selon la revendication 1, avec un réglage automatique de la focalisation dans une caméra vidéo (1) munie d'un dispositif passif de focalisation et avec un cadre (63) inséré dans l'image vidéo (61) de la caméra vidéo (1) pour saisir une image d'objet (62), caractérisé par une unité de commande d'image (3) reliée à un ordinateur (4), à la caméra vidéo (1) et à une unité de commande de focalisation (5), celle-ci étant reliée de son côté à la caméra vidéo (1), l'unité de commande d'image (3) déterminant la clarté moyenne (13) des points d'image de l'image de l'objet (62) dans le cadre (63), et envoyant les signaux de commande correspondant à la clarté moyenne (13), à l'unité de commande de focalisation (5).

3. Dispositif selon la revendication 2, caractérisé en ce que l'unité de commande de focalisation (5) envoie des signaux de commande au dispositif de focalisation de la caméra vidéo (1) et l'actionne jusqu'à ce que la modification de la clarté moyenne (13) des points d'image de l'image de l'objet (62) en fonction du réglage de netteté, ne dépasse plus une limite établie.

4. Dispositif selon la revendication 2 ou 3, caractérisé en ce que la caméra vidéo (1) est une caméra FLIR (forward looking infrared camera).

5. Utilisation du procédé de la revendication 1, caractérisée en ce que la caméra vidéo (1) est reliée à un robot industriel (21) et saisit optiquement une pièce (71) ou un outil (72).

6. Utilisation du procédé selon la revendication 1, caractérisée en ce qu'une caméra FLIR est solidaire d'une plateforme mobile (22) et suit optiquement une cible (73).
